(19) Europäisches Patentamt
European Patent Office
Office européen des brevets

(11) **EP 1 454 437 B1**

(12) **EUROPEAN PATENT SPECIFICATION**

(45) Date of publication and mention
of the grant of the patent:
**26.05.2010 Bulletin 2010/21**

(51) Int Cl.:
***H04B 10/17*** *(2006.01)*    ***H04J 14/02*** *(2006.01)*

(21) Application number: **02762553.2**

(22) Date of filing: **11.09.2002**

(86) International application number:
**PCT/GB2002/004135**

(87) International publication number:
**WO 2003/032533 (17.04.2003 Gazette 2003/16)**

(54) **OPTICAL AMPLIFIER CONTROL IN WDM COMMUNICATIONS SYSTEMS**

OPTISCHE VERSTÄRKERREGELUNG IN EINEM WDM-KOMMUNIKATIONSSYSTEM

COMMANDE D'AMPLIFICATEUR OPTIQUE DANS DES SYSTEMES DE COMMUNICATION WDM

(84) Designated Contracting States:
**AT BE BG CH CY CZ DE DK EE ES FI FR GB GR
IE IT LI LU MC NL PT SE SK TR**

(30) Priority: **09.10.2001 GB 0124258**

(43) Date of publication of application:
**08.09.2004 Bulletin 2004/37**

(73) Proprietor: **Ericsson AB
164 80 Stockholm (SE)**

(72) Inventors:
• **CORR, Benjamin, John
Worcestershire WR14 4JA (GB)**
• **PEGG, Steven, Ian
Northampton,
Northants NN4 8GF (GB)**
• **PACKHAM, Robert, Richard
Andover,
Hants SP10 4RS (GB)**

(74) Representative: **Parkinson, Neil Scott et al
Ericsson Limited
Patent Unit Optical Networks
Unit 4 Midleton Gate
Guildford Business Park
Guildford,
Surrey GU2 8SG (GB)**

(56) References cited:
**EP-A- 1 130 819      WO-A-00/04613
WO-A-99/66610      US-A- 6 057 959**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates to a system and method for controlling optical amplifiers in WDM communications systems. More especially the invention concerns controlling the gain of the optical amplifier to maintain a flat gain profile over the WDM wavelength spectrum.

Erbium doped fibre amplifiers (EDFAs) are widely used in wavelength division multiplexing (WDM) systems. The amplifiers should ideally have a flat gain profile across the spectral band in which the amplifier is operating. Typically values of $\pm 0.5$ dB are acceptable in optical telecommunication networks.

The gain profile of an EDFA changes as operating conditions change. For example, a change in input power to the EDFA, or a change of temperature of the EDFA, will cause the gain to "slope". By "slope" it is meant that the gain at one end of the operating wavelength spectrum is larger than at the other end.

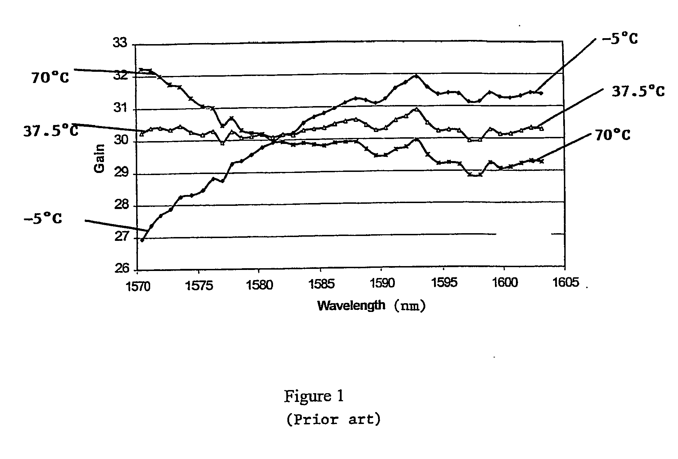

Referring to Figure 1, the variation in spectral gain of a typical L-band (long wavelength operation band ~1570-1605nm) EDFA with temperature is shown. As the temperature increases, the gain in the fibre changes from having higher gain at the red (longer wavelength) end of the operating spectrum, to having higher gain at the blue (shorter wavelength) end of the operating spectrum. The amplifier is designed so at a nominal temperature (37.5°C in the example illustrated) the gain is substantially flat over the operating spectrum (1570nm to 1603nm).

The rate at which the gradient of the gain slope changes with respect to temperature change is dependent on the amount of erbium (Er) doping in the amplifier. Higher levels of Er doping increase the gain slope change for a given change in temperature. Under normal operating conditions this can be approximated by

$$\frac{\Delta G}{G} = k \Delta T \text{,}$$ where $\Delta G$ is the peak gain variation, G is the mean amplifier gain, $\Delta T$ is the change in temperature and k is an amplifier dependent constant.

It is known that an EDFA operating in the L-band (1570nm to 1605nm) has a lower operational inversion population (that is the ratio of excited state $Er^{3+}$ ions to ground state $Er^{3+}$ ions) than a C-band EDFA amplifier operating between 1532nm to 1561nm. As a result, L-band amplifiers require a greater number of $Er^{3+}$ ions than C-band amplifiers to achieve the same gain. It follows that L-band erbium doped amplifiers will exhibit a greater variation of gain with respect to temperature than a C-band erbium doped amplifier with equivalent gain.

At present, compensation for this change in gain is controlled by changing a loss in a system. In one known example, the loss is controlled by a variable optical attenuator (VOA) placed between the gain stages in a multi-stage EDFA. By reducing the signal input power into a gain stage, fewer photons are able to deplete the

$Er^{3+}$ ions in the excited state, thus more excited ions remain in the excited state. The relatively higher number of $Er^{3+}$ ions in the excited state increases the gain at shorter operational wavelengths, and so the gain slope of the latter stage is tilted towards the blue (shorter wavelength) end of the operational spectrum. Conversely, increasing the input power by reducing the mid-stage loss tilts the gain slope to the red (longer wavelength) end of the operating spectrum.

Such an amplifier system must be pre-calibrated for automatic control of the VOA. The pre-calibration requires the amplifier to be characterised over a temperature range before the amplifier is put into service. Typically, the amplifier includes a temperature monitor and an attenuation value for the VOA is selected on the basis of the measured temperature.

Furthermore, the pump power into the final amplification stage is changed to compensate for output power variations. The output power from the amplifier is measured by splitting-off a small amount of the output signal using an optical tap and measuring this split-off signal using a photo-diode. The pump power is controlled in a feedback loop with this measured output.

The amplifier maintains a substantially flat gain profile and constant output power across the operating spectrum using the two processes described above.

In present amplifier systems characterisation of the VOA settings must be performed fully for each amplifier design. A graph of the attenuation required against temperature is approximately linear and depends on a number of variables. These variables include the amount of erbium doping and the characteristics of individual amplifiers associated with component losses and build variations, for example fibre splicing losses. The slope is assumed to be constant for all amplifiers built of a given type. Limited measurements of individual amplifiers are necessary to determine a build variation offset.

There are disadvantages with this control system. Firstly, the characterisation of the amplifier is lengthy and is even more time consuming as the number of amplifier derivatives in a system increases. The time taken to characterise such a system is excessive and burdensome.

Furthermore, the amplifier is controlled according to its initial characterisation. The control system does not have the ability to predict the behaviour of an amplifier over its lifetime. Effects, such as ageing of the doped fibre or components, wavelength shift of the pump laser, or the need to run the amplifier at temperatures/input powers outside the calibrated range, may result in a degradation of an amplifier system performance. There is little experience of how ageing affects the characteristics of EDFAs, or their components.

It is also known to use heaters to maintain constant fibre temperatures, thus negating the need to compensate for temperature variation. However, signal input power variations may still be required for controlling such systems. Also, the heaters require an electrical power supply and a thermostatic control system to operate the heater element in the amplifier box, adding expense and mechanical complexity to the design.

The present invention aims to ameliorate the problems associated with the prior art. In its broadest form, the invention controls the amplifier characteristics from empirical information taken during amplifier operation.

More specifically, there is provided a system for controlling gain of an optical amplifier, the optical amplifier being disposed in a WDM optical communication network for amplifying an input WDM signal to produce a corresponding amplified output WDM signal, the system being characterised by: means for measuring average optical powers of the input WDM signal over first and second wavebands, said first and second wavebands each covering a wavelength range that includes at least one wavelength channel of the WDM network; means for measuring average optical powers of the amplified output WDM signal over the first and second wavebands; means for determining gain values over the first and second wavebands from the average input and output powers; and means for adjusting a variable of the optical amplifier such that the difference between the gain values is maintained to within a pre-determined value.

The present invention has the advantages that the network is protected from unforeseen changes in amplifier behaviour. By using empirical information the system can adapt as changes occur or as changes are made to the network.

Preferably the means for measuring average optical powers of the input WDM signal over the first and second wavebands comprises: a first sampler for sampling a first amount of the input signal; a splitter for splitting the sampled WDM signal into the two wavebands; and a detector for measuring the power of the sampled signal over the first and second wavebands.

Similarly the means for measuring average optical powers of the amplified output WDM signal over the first and second wavebands advantageously comprises: a second sampler for sampling a second amount of the output signal; a splitter for splitting the sampled WDM signal into the two wavebands; and a detector for measuring the power of the sampled signal at the first and second wavebands.

Advantageously the first and second sampler comprise an optical tap, such as an optical fibre splice.

In a preferred implementation the amplifier includes a variable optical attenuator for variably attenuating the input WDM signal and wherein the variable for controlling the difference between gain values is the attenuation of the attenuator.

Alternatively, or in addition, the amplifier can include temperature controlling means for controlling the temperature of the optical amplifier and wherein the variable for controlling the difference between gain values is the temperature of the amplifier.

Advantageously the optical amplifier comprises at least one EDFA gain stage.

Preferably each waveband has a wavelength range which includes a plurality of wavelength channels of the WDM network. Such an arrangement ensures the presence of radiation power within each band thereby enabling the average power over each waveband at the input and output to be determined.

In a particularly preferred arrangement the first and second wavebands are located on either side of a central operating wavelength channel. To ensure there is a maximum number of channels present in each waveband, each waveband advantageously has a wavelength range including a respective half of the WDM wavelength channels.

According to a second aspect of the invention there is provided a wavelength division multiplexing optical communication network incorporating the system described above.

There is further provided a method for controlling gain of an optical amplifier in a WDM optical communication network, the amplifier being for amplifying an input WDM signal to produce a corresponding amplified WDM signal, the method comprising: measuring average optical powers of the input WDM signal over first and second wavebands, said first and second wavebands each covering a wavelength range that includes at least one wavelength channel of the WDM network; measuring average optical powers of the amplified output WDM signal over the first and second wavebands; determining gain values over the first and second wavebands from the average input and output powers; and adjusting a variable of the optical amplifier such that the difference between the gain values is maintained to within a pre-determined value.

Advantageously the method further comprises sampling a first amount of the input WDM signal; splitting the WDM signal into a plurality wavebands; and measuring the average power of the sampled signal over the first and second wavebands.

Preferably the method further comprises sampling a second amount of the amplified WDM signal; splitting the WDM signal into a plurality wavebands; and measuring the average power of the sampled signal over the first and second wavebands.

Preferably each of the first and second wavebands are disposed either side of a central operating wavelength channel and advantageously has a wavelength range which includes a plurality of wavelength channels.

An embodiment of the present invention is now described, by way of example only, with reference to the accompanying figures, in which;

    Figure 1 is a graph of gain versus wavelength for an EDFA at different temperatures and discussed above;

    Figure 2 is a schematic representation of a system embodying the present invention for controlling an optical amplifier;

Figure 3 is a graph showing the transmission and reflection characteristics with wavelength of a filter arrangement used in an embodiment of the present invention;

Figure 4 is a graph representing a number of the forty optical channels transmitted in a preferred embodiment; and

Figure 5 is a graphical representation of the optical channels incident on the photodiodes in the preferred embodiment.

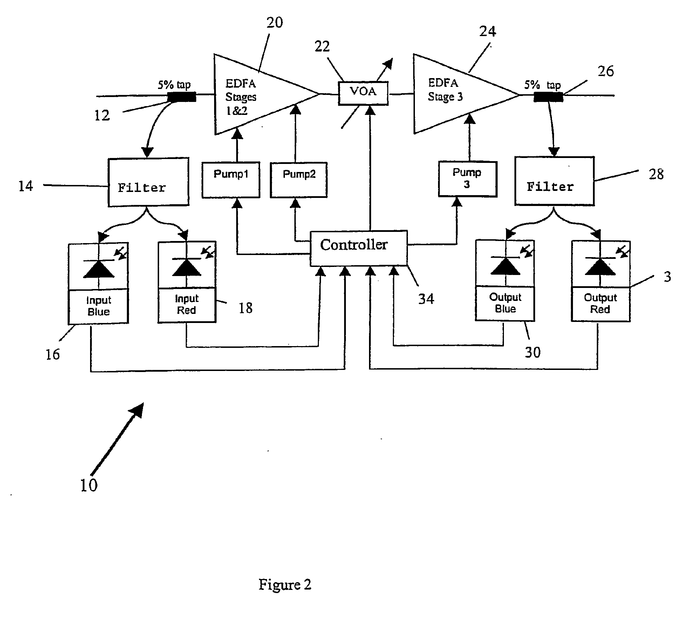

Referring to Figure 2, an EDFA amplifier system 10 embodying the present invention is shown comprising three gain stages 20, 24. The amplifier system is intended for use in a forty channel dense WDM communication system operating within L-band (1570nm-1603nm) with a 100GHz (0.8nm) spacing of optical wavelength channels.

An optical tap 12 samples an input WDM optical signal as the signal enters the amplifier system. The input sample is split into two wavebands, by a filter, or splitter 14.

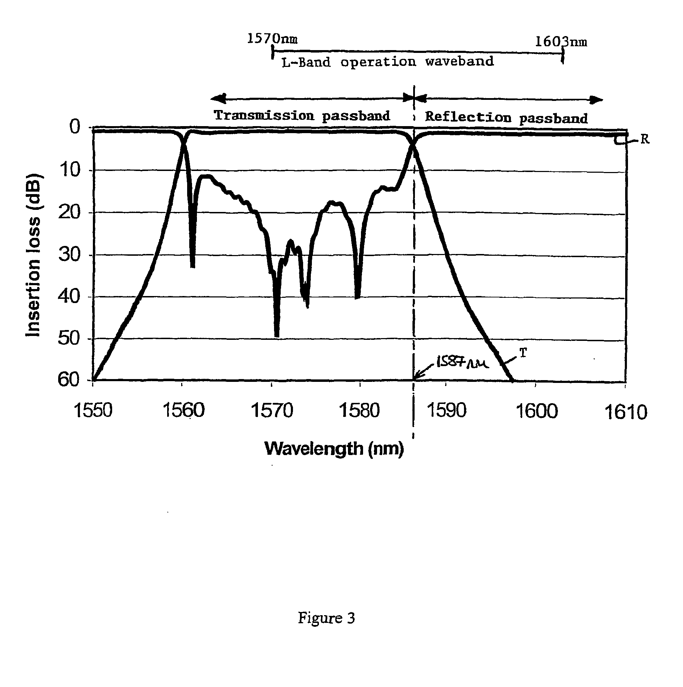

The filter 14 is designed to reflect and transmit radiation incident on it to respective outputs. The reflected and transmitted radiation correspond to the two wavebands. The spectral characteristic (insertion loss versus wavelength) of the filter is shown in Figure 3 for both transmission (T) and reflection (R). The input signal is split into a first lower waveband 1570-1587nm and a second upper waveband 1587-1603nm disposed either side of a central operational wavelength (approximately the centre wavelength for L-band operation, 1587nm).

It will be noted from Figure 3 that the transmission and reflection passbands of the filter actually correspond approximately to 1560-1587nm and 1587-1610nm respectively. Although these passbands will allow radiation to pass which is outside L-band operation (1570nm-1603nm), no significant radiation outside the L-band is present on the system described. The choice of this wavelength split is arbitrary. However, sufficient signal power in each waveband is required to monitor the amplifier gain. That is, a signal on at least one channel in each waveband is required to monitor the amplifier gain at all times. Respective photodiodes 16, 18 measures a signal strength (power) of each waveband.

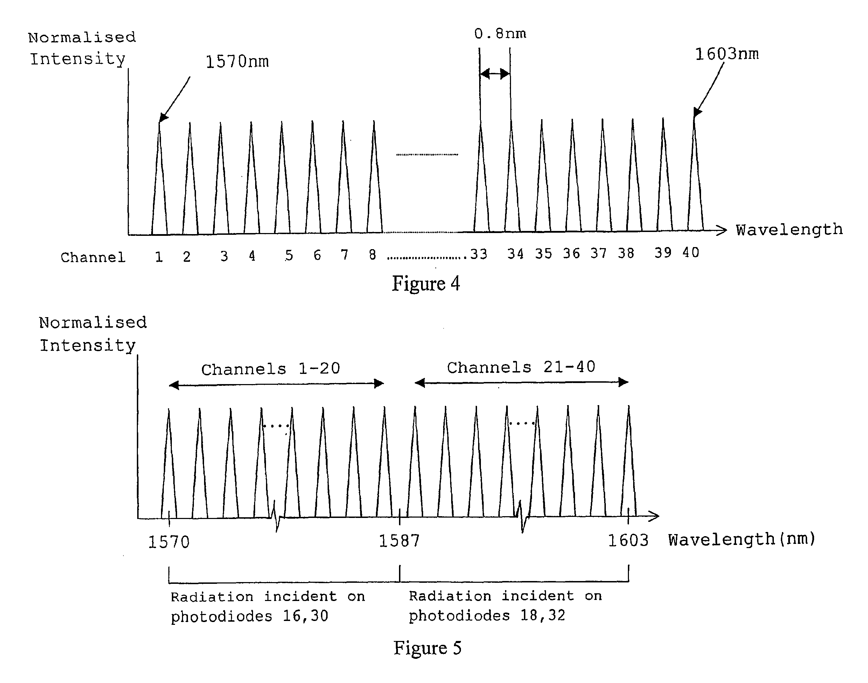

Referring to Figure 4 and Figure 5, a representation of the forty optical channels of the WDM signal with respect to wavelength is shown. The channels numbered 1 to 20 are in the lower waveband of 1570nm to 1586nm, and the channels numbered 21 to 40 are in the upper waveband 1587nm to 1603nm. Referring to Figure 3 discussed above, the transmission characteristics of the filter 14 show it has relatively low loss for a first waveband from 1560nm to 1587nm and relatively high loss for a second waveband 1587nm to 1610nm. Conversely, the reflection characteristics of the filter show it has relatively high loss in the first waveband and relatively low loss in the second waveband. Thus, the filter 14 splits the forty channels into two twenty channel wavebands, each waveband being either side of a central wavelength, as shown in Figure 5. Essentially, in this embodiment, the filter behaves as a band-pass filter having high transmission characteristics in one waveband and high reflection characteristics in another adjacent waveband. Such filters can utilise multiple dielectric layers to achieve the required reflective and transmission characteristics.

The remaining majority of the input WDM signal propagates through the first two gain stages 20, to a variable optical attenuator 22 (VOA) and through the third gain stage 24 to the amplifier output. At the output, another sample of the signal is taken by a second optical tap 26. This output sample is split into the same two wavebands as for the input signal by a filter 28 (that is wavelength bands corresponding to wavelength channels 1 to 20, 1570-1587nm, and channels 21 to 40, 1587-1603nm). The average signal strength (power) of the two wavebands is measured using a further pair of photodiodes 30, 32.

The photodiodes 16 and 30 measure the input and output signal power values respectively over the first waveband with shorter wavelengths (blue), and the photodiodes 18, 32 measure the input and output signal power values respectively over the second waveband with longer wavelengths (red) than the central wavelength.

The input and output power values for each waveband are assimilated by a control unit 34. The control unit 34 determines the necessary changes of attenuation of the VOA 22 that may be needed for ideal operation of the amplifier system 10. A simple indication of the average gain of the amplifier system can be determined from the following relationships:

$$\Delta\text{Gain} = \text{Gain}_{red} - \text{Gain}_{blue}$$

where

$$\text{Gain}_{red} = \text{Output}_{red} - \text{Input}_{red}$$

and

$$\text{Gain}_{blue} = \text{Output}_{blue} - \text{Input}_{blue}$$

Input$_{blue}$ and Input$_{red}$ (as measured by the photodiodes 16 and 18 respectively) are the measured powers in dBm of each of the red and blue wavebands at the input to the amplifier system. Likewise, Output$_{blue}$ and Output$_{red}$ (as measured by the photodiodes 30 and 32 respectively) are the measured powers in dBm of each of these red and blue wavebands at the output of the amplifier system. Grain$_{red}$ and Gain$_{blue}$ are the average gains of each waveband over the amplifier system.

Ideally, for the amplifier to have a flat gain/wavelength response, or spectral profile, $\Delta$Gain=0. When $\Delta$Gain>0 a gain slope favouring longer (red) wavelength channels is present. Conversely, when $\Delta$Gain<0 a gain slope favouring shorter (blue) wavelength channels is present.

Thus, the magnitude and sign of $\Delta$Gain can be used by the controller 34 to control the attenuation of the VOA 22, and hence the amplification gain response of the third gain stage 24. This in turn controls the amplifier system output. By changing the attenuation, the gain spectrum can be flattened to achieve $\Delta$Gain$\cong$0. If $\Delta$Gain>0, the attenuation is increased, and if Gain<0 the attenuation is decreased.

Variations caused by system components mean that ideal operation is not necessarily achieved when $\Delta$Gain=0; it is likely to be offset by a small amount. In one system implementation, an optimum value of $\Delta$Gain=0.3dB has been measured.

It will be appreciated that in the amplifier system of the present invention the sampled input and output signals are used in a feedback loop with the controller and VOA to control the amplifier system characteristics. If the characteristics of the various gain stages, or amplifier components, change then the feedback loop makes changes to VOA attenuation level so that the amplifier continues to perform to an optimum. In this way, any long term degradation, or short term variation of the amplifier components, that could have otherwise lead to degradation of the amplifier's performance, can be compensated for. This results in an increased operational lifetime, or increase period between service.

In other embodiments it is envisaged to improve the accuracy of the monitoring process by splitting the sampled signals into more than two wavebands.

Optical taps and VOAs are well known and typically have a flat spectral response.

Splitting or dividing the signal into the wavelength sub-bands can be achieved using known methods such as diffraction gratings or interference filters. Furthermore, photodiodes with integral filters can be used.

The VOA 22 is shown in Figure 2 placed between the second and third gain stage. Its position is not limited and it can be placed before any of the gain stages. However the position described in the preferred embodiment is considered to give optimal signal to noise ratio performance of the output signal.

Furthermore, it is not essential that the optical taps 12, 26 are placed at the input and output. For example, the taps can be positioned between amplification stages, but at least one amplifier must remain between the taps. The power sampled by each tap is arbitrary. Figure 2 shows taps 12, 26 that samples 5% of the signal power. Other taps that sample more or less power would work equally well. Consideration of the amount of power sampled is needed so that not too much power is removed from the signal yet sufficient is sampled to allow accurate measurement by the photodiodes. Furthermore, the output tap 26 does not need to sample the same percentage amount as the input tap 12. In this instance, a correction factor is required in the controller so that the gain values are correctly calculated.

If fibre temperature control systems are available for use, the feedback system could be used to control fibre temperature, rather than, or as well as, the attenuation of the VOA. Also, control of the amplifier pumps (denoted Pump 1 to Pump 3 in Figure 2) could be used to maintain output power levels.

The embodiment described has three gain stages in one amplifier system. Of course, a number of gain stages can be used with any combination of sampling points and feedback loops.

## Claims

1. A system (10) for controlling gain of an optical amplifier, the optical amplifier being disposed in a WDM optical communication network for amplifying an input WDM signal to produce a corresponding amplified output WDM signal, the system **characterised by**: means (12, 14, 16, 18) for measuring average optical powers of the input WDM signal over first and second wavebands, said first and second wavebands each covering a wavelength range that includes at least one wavelength channel (channels 1-20 and channels 21-40) of the WDM network; means (26, 28, 30, 32) for measuring average optical powers of the amplified output WDM signal over the first and second wavebands; means (34) for determining gain values (Gain$_{red}$, Gain$_{blue}$) over the first and second wavebands from the average input and output powers; and means (34) for adjusting a variable (22) of the optical amplifier such that the difference ($\Delta$Gain) between the gain values is maintained to within a pre-determined value.

2. A system according to Claim 1, in which the means for measuring average optical powers of the input WDM signal over the first and second wavebands comprises: a first sampler (12) for sampling a first amount of the input signal; a splitter (14) for splitting the sampled WDM signal into the two wavebands; and a detector (16, 18) for measuring the power of the sampled signal over the first and second wavebands.

3. A system according to Claim 1 or Claim 2, in which the means for measuring average optical powers of the amplified output WDM signal over the first and second wavebands comprises: a second sampler (26) for sampling a second amount of the output signal; a splitter (28) for splitting the sampled WDM signal into the two wavebands; and a detector (30, 32) for measuring the power of the sampled signal at the first and second wavebands.

4. A system according to any preceding claim, in which the amplifier includes a variable optical attenuator (22) for variably attenuating the input WDM signal and wherein the variable for controlling the difference between gain values is the attenuation of the attenuator.

5. A system according to any preceding claim, in which the amplifier includes temperature controlling means for controlling the temperature of the optical amplifier and wherein the variable for controlling the difference between gain values is the temperature of the amplifier.

6. A system according to any preceding claim, in which the optical amplifier comprises at least one EDFA gain stage (20, 24).

7. A system according to any preceding claim, in which each waveband has a wavelength range which includes a plurality of wavelength channels of the WDM network.

8. A system according to Claim 7, in which the first and second wavebands are located on either side of a central operating wavelength channel.

9. A wavelength division multiplexing optical communication network incorporating the system according to any preceding claim.

10. A method for controlling gain of an optical amplifier in a WDM optical communication network, the amplifier being for amplifying an input WDM signal to produce a corresponding amplified WDM signal, the method comprising: measuring average optical powers of the input WDM signal over first and second wavebands, said first and second wavebands each covering a wavelength range that includes at least one wavelength channel of the WDM network; measuring average optical powers of the amplified output WDM signal over the first and second wavebands; determining gain values over the first and second wavebands from the average input and output powers; and adjusting a variable of the optical amplifier such that the difference between the gain values is maintained to within a pre-determined value.

11. A method according to Claim 10, and comprising sampling a first amount of the input WDM signal; splitting the WDM signal into a plurality wavebands; and measuring the average power of the sampled signal over the first and second wavebands.

12. A method according to Claim 10 or Claim 11, and comprising sampling a second amount of the amplified WDM signal; splitting the WDM signal into a plurality wavebands; and measuring the average power of the sampled signal over the first and second wavebands.

13. A method according to any one of Claims 10 to 12, wherein each of the first and second wavebands are disposed either side of a central operating wavelength channel.

14. A method according to Claim 13, wherein each waveband has a wavelength range which includes a plurality of wavelength channels.

**Patentansprüche**

1. System (10) zum Regeln der Verstärkung eines optischen Verstärkers, wobei der optische Verstärker in einem optischen WDM-Kommunikationsnetz zum Verstärken eines WDM-Eingangssignals angeordnet ist, um ein entsprechendes verstärktes WDM-Ausgangssignal zu erzeugen, und das System **gekennzeichnet ist durch**: Mittel (12, 14, 16, 18) zum Messen von mittleren optischen Leistungen des WDM-Eingangssignals über erste und zweite Wellenbänder, wobei die ersten und zweiten Wellenbänder jeweils einen Wellenlängenbereich dekken, der wenigstens einen Wellenlängenkanal (Kanäle 1 - 20 und Kanäle 21 - 40) des WDM-Netzes umfasst; Mittel (26, 28, 30, 32) zum Messen von mittleren optischen Leistungen des verstärkten WDM-Ausgangssignals über die ersten und zweiten Wellenbänder; Mittel (34) zum Bestimmen von Verstärkungswerten ($Gain_{red}$, $Gain_{blue}$) über die ersten und zweiten Wellenbänder aus den mittleren Eingangs- und Ausgangsleistungen; und Mittel (34) zum derartigen Einstellen einer Variablen (22) des optischen Verstärkers, dass die Differenz ($\Delta Gain$) zwischen den Verstärkungswerten innerhalb eines vorbestimmten Wertes gehalten wird.

2. System nach Anspruch 1, wobei das Mittel zum Messen von mittleren optischen Leistungen des WDM-Eingangssignals über die ersten und zweiten Wellenbänder umfasst: einen ersten Abtaster (12) zum Abtasten eines ersten Betrags des Eingangssignals; einen Teiler (14) zum Teilen des abgetasteten WDM-Signals in die beiden Wellenbänder; und einen Detektor (16, 18) zum Messen der Leistung des abgetasteten Signals über die ersten und zweiten Wellenbänder.

3. System nach Anspruch 1 oder 2, wobei das Mittel zum Messen von mittleren optischen Leistungen des verstärkten WDM-Ausgangssignals über die ersten und zweiten Wellenbänder umfasst: einen zweiten Abtaster (26) zum Abtasten eines zweiten Betrags des Ausgangssignals; einen Teiler (28) zum Teilen des abgetasteten WDM-Signals in die beiden Wellenbänder; und einen Detektor (30, 32) zum Messen der Leistung des abgetasteten Signals an den ersten und zweiten Wellenbändern.

4. System nach einem der vorhergehenden Ansprüche, wobei der Verstärker ein regelbares optisches Dämpfungsglied (22) zum regelbaren Dämpfen des WDM-Eingangssignals umfasst, und wobei die Variable zum Steuern der Differenz zwischen Verstärkungswerten die Dämpfung des Dämpfungsglieds ist.

5. System nach einem der vorhergehenden Ansprüche, wobei der Verstärker Temperaturregelmittel zum Regeln der Temperatur des optischen Verstärkers umfasst, und wobei die Variable zum Steuern der Differenz zwischen Verstärkungswerten die Temperatur des Verstärkers ist.

6. System nach einem der vorhergehenden Ansprüche, wobei der optische Verstärker wenigstens eine EDFA-Verstärkungsstufe (20, 24) umfasst.

7. System nach einem der vorhergehenden Ansprüche, wobei jedes Wellenband einen Wellenlängenbereich aufweist, der eine Mehrzahl von Wellenlängenkanälen des WDM-Netzes umfasst.

8. System nach Anspruch 7, wobei sich die ersten und zweiten Wellenbänder auf beiden Seiten eines zentralen Wellenlängenbetriebskanals befinden.

9. Optisches Wellenlängenmultiplex-Kommunikationsnetz, umfassend das System nach einem der vorhergehenden Ansprüche.

10. Verfahren zum Regeln der Verstärkung eines optischen Verstärkers in einem optischen WDM-Kommunikationsnetz, wobei der Verstärker zum Verstärken eines WDM-Eingangssignals dient, um ein entsprechendes verstärktes WDM-Ausgangssignal zu erzeugen, und das Verfahren umfasst: Messen von mittleren optischen Leistungen des WDM-Eingangssignals über erste und zweite Wellenbänder, wobei die ersten und zweiten Wellenbänder jeweils einen Wellenlängenbereich decken, der wenigstens einen Wellenlängenkanal des WDM-Netzes umfasst; Messen von mittleren optischen Leistungen des verstärkten WDM-Ausgangssignals über die ersten und zweiten Wellenbänder; Bestimmen von Verstärkungswerten über die ersten und zweiten Wellenbänder aus den mittleren Eingangs- und Ausgangsleistungen; und derartiges Einstellen einer Variablen des optischen Verstärkers, dass die Differenz zwischen den Verstärkungswerten innerhalb eines vorbestimmten Wertes gehalten wird.

11. Verfahren nach Anspruch 10 und umfassend ein Abtasten eines ersten Betrags des WDM-Eingangssignals; Teilen des WDM-Signals in eine Mehrzahl von Wellenbändern; und Messen der mittleren Leistung des abgetasteten Signals über die ersten und zweiten Wellenbänder.

12. Verfahren nach Anspruch 10 oder 11 und umfassend ein Abtasten eines zweiten Betrags des WDM-Ausgangssignals; Teilen des WDM-Signals in eine Mehrzahl von Wellenbändern; und Messen der mittleren Leistung des abgetasteten Signals über die ersten und zweiten Wellenbänder.

13. Verfahren nach einem der Ansprüche 10 bis 12, wobei jedes der ersten und zweiten Wellenbänder auf beiden Seiten eines zentralen Wellenlängenbetriebskanals angeordnet ist.

14. Verfahren nach Anspruch 13, wobei jedes Wellenband einen Wellenlängenbereich aufweist, der eine Mehrzahl von Wellenlängenkanälen umfasst.

## Revendications

1. Système (10) de commande du gain d'un amplificateur optique, l'amplificateur optique étant disposé dans un réseau de communication optique WDM pour amplifier un signal WDM d'entrée afin de produire un signal WDM de sortie amplifié correspondant, le système étant **caractérisé par** : des moyens (12,14,16,18) pour mesurer les puissances optiques moyennes du signal WDM d'entrée sur une première et une seconde gamme d'ondes, lesdites première et seconde gammes d'ondes couvrant chacune une plage de longueur d'onde qui inclut au moins un canal de longueur d'onde (canaux 1-20 et canaux 21-40) du réseau WDM ; des moyens (26,28,30,32) pour mesurer les puissances optiques moyennes du signal WDM de sortie amplifié sur la première et la seconde gamme d'ondes ; des moyens (34) pour déterminer des valeurs de gain ($Gain_{red}$, $Gain_{blue}$) sur la première et la seconde gamme d'ondes d'après les puissances moyennes d'entrée et de sortie ; et des moyens (34) pour ajuster une variable (22) de l'amplificateur optique de telle sorte que la différence ($\Delta Gain$) entre les valeurs de gain soit maintenue dans les limites d'une valeur prédéterminée.

**2.** Système selon la revendication 1, dans lequel les moyens pour mesurer les puissances optiques moyennes du signal WDM d'entrée sur la première et la seconde gamme d'ondes comprennent : un premier échantillonneur (12) pour échantillonner une première quantité du signal d'entrée ; un diviseur (14) pour diviser le signal WDM échantillonné en les deux gammes d'ondes ; et un détecteur (16,18) pour mesurer la puissance du signal échantillonné sur la première et la seconde gamme d'ondes.

**3.** Système selon la revendication 1 ou 2, dans lequel les moyens pour mesurer les puissances optiques moyennes du signal WDM de sortie amplifié sur la première et la seconde gamme d'ondes comprennent : un second échantillonneur (26) pour échantillonner une seconde quantité du signal de sortie ; un diviseur (28) pour diviser le signal WDM échantillonné en les deux gammes d'ondes ; et un détecteur (30,32) pour mesurer la puissance du signal échantillonné au niveau de la première et la seconde gamme d'ondes.

**4.** Système selon une quelconque des revendications précédentes, dans lequel l'amplificateur inclut un atténuateur optique variable (22) pour atténuer de manière variable le signal WDM d'entrée et dans lequel la variable pour commander la différence entre les valeurs de gain est l'atténuation de l'atténuateur.

**5.** Système selon une quelconque des revendications précédentes, dans lequel l'amplificateur inclut des moyens de commande de température pour commander la température de l'amplificateur optique et dans lequel la variable pour commander la différence entre les valeurs de gain est la température de l'amplificateur.

**6.** Système selon une quelconque des revendications précédentes, dans lequel l'amplificateur optique comprend au moins un étage de gain EDFA (20,24).

**7.** Système selon une quelconque des revendications précédentes, dans lequel chaque gamme d'ondes possède une plage de longueur d'onde qui inclut une pluralité de canaux de longueur d'onde du réseau WDM.

**8.** Système selon la revendication 7, dans lequel la première et la seconde gamme d'ondes sont situées sur l'un ou l'autre côté d'un canal de longueur d'onde de fonctionnement central.

**9.** Réseau de communication optique à multiplexage par répartition en longueur d'onde incorporant le système selon une quelconque des revendications précédentes.

**10.** Procédé de commande du gain d'un amplificateur optique dans un réseau de communication optique WDM, l'amplificateur servant à amplifier un signal WDM d'entrée pour produire un signal WDM d'entrée amplifié correspondant ; le procédé comprend les étapes consistant à : mesurer des puissances optiques moyennes du signal WDM d'entrée sur la première et la seconde gamme d'ondes, lesdites première et seconde gamme d'ondes couvrant chacune une plage de longueur d'onde qui inclut au moins un canal de longueur d'onde du réseau WDM ; mesurer des puissances optiques moyennes du signal WDM de sortie amplifié sur la première et la seconde gamme d'ondes ; déterminer des valeurs de gain sur la première et la seconde gamme d'ondes d'après les puissances d'entrée et de sortie moyennes ; et ajuster une variable de l'amplificateur de telle sorte que la différence entre les valeurs de gain soit maintenue dans les limites d'une valeur prédéterminée.

**11.** Procédé selon la revendication 10, et comprenant les étapes consistant à échantillonner une première quantité du signal WDM d'entrée ; diviser le signal WDM en une pluralité de gammes d'ondes ; et mesurer la puissance moyenne du signal échantillonné sur la première et la seconde gamme d'ondes.

**12.** Procédé selon la revendication 10 ou 11, et comprenant les étapes consistant à échantillonner une seconde quantité du signal WDM amplifié : diviser le signal WDM en une pluralité de gammes d'ondes ; et mesurer la puissance moyenne du signal échantillonné sur la première et la seconde gammes d'ondes.

**13.** Procédé selon une quelconque des revendications 10 à 12, dans lequel chacune de la première et la seconde gammes d'ondes sont disposées de l'un ou l'autre côté d'un canal de longueur d'onde de fonctionnement central.

**14.** Procédé selon la revendication 13, dans lequel chaque gamme d'ondes possède une plage de longueur d'ondes qui inclut une pluralité de canaux de longueur d'onde.

Figure 1
(Prior art)

Figure 2

Figure 3

Normalised
Intensity

1570nm

0.8nm

1603nm

Channel    1   2    3    4    5   6   7   8 ......................33   34 35 36 37 38   39 40     Wavelength

Figure 4

Normalised
Intensity

Channels 1-20

Channels 21-40

1570                   1587                  1603   Wavelength(nm)

Radiation incident on
photodiodes 16,30

Radiation incident on
photodiodes 18,32

Figure 5